# EUROPEAN PATENT APPLICATION

(11) **EP 4 715 760 A1**
(43) Date of publication of application: **25.03.2026**
(21) Application number: 25203638.9
(22) Date of filing: 22.09.2025
(51) Int. Cl.: G06V 20/17, G06V 10/25

(54) **RUNWAY INCURSION DETECTION**

(30) Priority: 24.09.2024 US 202418895195
(71) Applicant: Daedalean AG, 8047 Zurich (CH)
(72) Inventor: KÖRNER, Mathias, 8003 Zurich (CH); WEBER, Stefan, 8055 Zurich (CH); VAN DIJK, Luuk Adriaan Cornelis, 6500 Bellinzona (CH)
(74) Representative: Berggren Oy

(57) **Abstract**

Systems and methods to detect runway incursions on runways are disclosed. Exemplary implementations may include capturing image information including images in front of and/or below an aircraft, detecting a runway in the images, generating feature vectors based on the image information, performing an assessment whether the feature vectors are consistent with a clear runway, and presenting information to a user subsequent to the assessment.

## Description

### FIELD OF THE DISCLOSURE

The present disclosure relates to systems and methods to detect runway incursions on runways, and in particular, perform such detections from an airborne aircraft.

### BACKGROUND

Aircraft are known. Runways are known. Runway incursions are known to cause potential interference with aircraft landing, e.g., by creating a collision hazard with an aircraft in the process of landing.

### SUMMARY

One aspect of the present disclosure relates to a system configured to detect runway incursions on runways. As used herein, the phrase "configured to" is intended to be interpreted broadly, as "being capable of or suitable for performing" some function or feature, without requiring any adaptations to provide said function or feature. As used herein, the term "aircraft" is used for both singular and plural. The system may include one or more image sensors, one or more physical processors, and/or other components. The one or more image sensors may be carried by a first aircraft, and configured to capture image information that conveys imagery, including in visible parts of the spectrum. The imagery may pertain to an area in front of and/or below the first aircraft. The system may be configured to obtain the image information including images in front of and/or below the first aircraft. The system may be configured to detect a runway in the images, e.g., by identifying a planar surface section within the images that is serviceable as a runway. The system may be configured to generate feature vectors based on the image information. The system may be configured to perform an assessment whether the feature vectors, at least for the identified planar surface section, are consistent with a clear runway free of runway incursions. The system may be configured to present information to a user subsequent to the assessment, and/or perform other steps. The system may be carried by the first aircraft.

Another aspect of the present disclosure related to a method of detecting runway incursions on runways. The method may include capturing image information including images in front of and/or below an aircraft. The method may include detecting a runway in the images. The method may include generating feature vectors based on the image information. The method may include performing an assessment whether the feature vectors are consistent with a clear runway. The method may include presenting information to a user subsequent to the assessment, and/or performing other steps.

As used herein, any association (or relation, or reflection, or indication, or correspondency, or correlation) involving aircraft, sensors, imagery, images, runways, detections, identifications, determinations, assessments, servers, processors, client computing platforms, users, output signals, vectors, events, locations, instructions, identifiers, notifications, presentations, interfaces, and/or another entity or object that interacts with any part of the system and/or plays a part in the operation of the system, may be a one-to-one association, a one-to-many association, a many-to-one association, and/or a many-to-many association or "N"-to-"M" association (note that "N" and "M" may be different numbers greater than 1).

As used herein, the term "obtain" (and derivatives thereof) may include active and/or passive retrieval, determination, derivation, transfer, upload, download, submission, and/or exchange of information, and/or any combination thereof. As used herein, the term "effectuate" (and derivatives thereof) may include active and/or passive causation of any effect, both local and remote. As used herein, the term "determine" (and derivatives thereof) may include measure, calculate, compute, estimate, approximate, generate, and/or otherwise derive, and/or any combination thereof.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 illustrates a system configured to detect runway incursions on runways, in accordance with one or more implementations.
FIG. 2 illustrates a method of detecting runway incursions on runways, in accordance with one or more implementations.
FIG. 3 illustrates an exemplary image as may be captured and/or obtained by a system configured to detect runway incursions on runways, in accordance with one or more implementations.
FIG. 4 illustrates a diagram of an exemplary runway as may be used in a system configured to detect runway incursions on runways, in accordance with one or more implementations.
FIG. 5A illustrates an exemplary image as may be used by a system configured to detect runway incursions on runways, in accordance with one or more implementations.
FIG. 5B illustrates an exemplary image as may be used by a system configured to detect runway incursions on runways, in accordance with one or more implementations.
FIG. 5C illustrates a processed image including markings as may be used or created by a system configured to detect runway incursions on runways, in accordance with one or more implementations.

### DETAILED DESCRIPTION

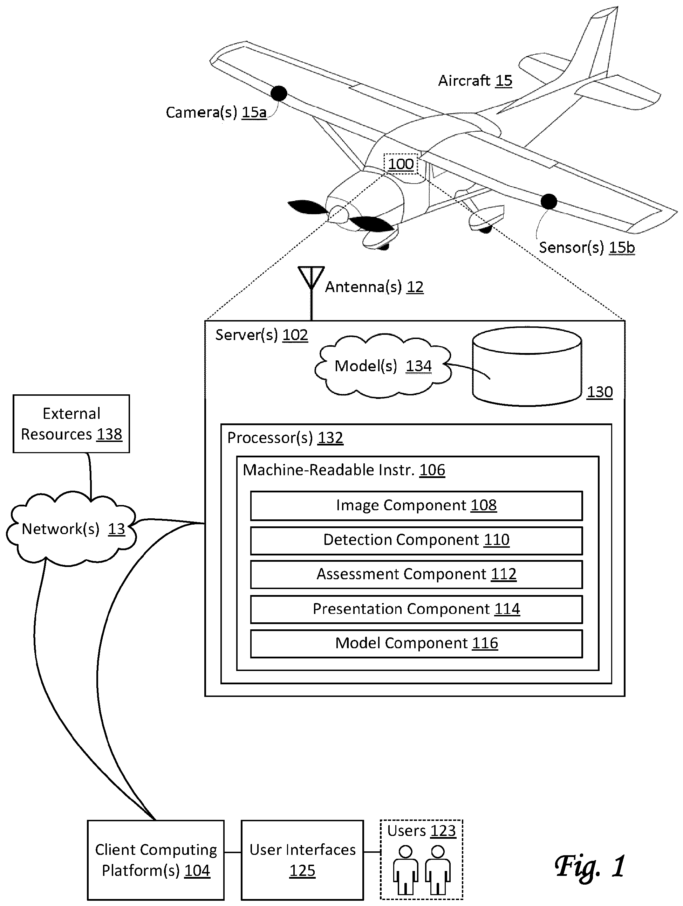

FIG. 1 illustrates a system 100 configured to detect runway incursions on runways, e.g., for a particular aircraft 15, in accordance with one or more implementations. By detecting runway incursions, potential interference with aircraft 15 landing can be prevented, e.g., by avoiding collision hazards. Information regarding detected runway incursions may be presented to a user, *e.g*., a pilot of aircraft 15. System 100 may include one or more of server(s) 102, processor(s) 132, electronic storage 130, antenna(s) 12, client computing platform(s) 104, user interface(s) 125, and/or other components. System 100 may be included in, carried by, and/or integrated in aircraft 15. An individual instance of system 100 may be specific to an individual aircraft, e.g., aircraft 15. In some cases, system 100 may include this aircraft 15. By virtue of the features described in this disclosure, unsafe conditions for landing aircraft 15 may be detected, and users may be notified accordingly. As used herein, positional information may refer to geographical locations. Users 123 (also referred to as users) may include one or more of a first user, a second user, a third user, and/or other users. As used in descriptions herein, any use of the term "user" may refer to user(s) 123, unless indicated otherwise. The concepts described in this disclosure may be applied to other zones of interest for aircraft, in addition to runways.

In some implementations, server(s) 102 may be configured to communicate with one or more client computing platforms 104 according to a client/server architecture and/or other architectures. In some implementations, client computing platform(s) 104 may be configured to communicate with other client computing platforms via server(s) 102, wherein the communication uses a peer-to-peer architecture and/or other architectures. Users may access system 100 via client computing platform(s) 104. In some implementations, system 100 and/or components thereof may be configured to communicate with one or more of users 123, and/or other entities and/or components, e.g., through one or more networks 13.

Server(s) 102 may include electronic storage 130, (hardware) processor(s) 132, machine-readable instructions 106, and/or other components. Server(s) 102 may be configured by machine-readable instructions 106. Machine-readable instructions 106 may include one or more instruction components. Instruction components (for any set of machine-readable instructions) may include computer program components. The instruction components may include one or more of an image component 108, a detection component 110, an assessment component 112, a presentation component 114, a model component 116, and/or other instruction components.

Aircraft 15 may include one or more antenna(s) 12, sensor(s) 15b, camera(s) 15a, and/or other components. Antenna(s) 12 may be configured to receive and/or transmit signals, including but not limited to radar signals, communication signals, and/or other signals. Sensors 15b may include one or more of an altimeter, an airspeed sensor, a compass, an image sensor, *etc.* Sensor(s) 15b may be configured to capture sensor information, *e.g.,* pertaining to surroundings of aircraft 15. Sensor(s) 15b may be carried by aircraft 15. Image sensors, e.g., cameras, may be configured to capture, record, and/or convey image information such as still imagery and/or video imagery, which may be sensitive to visible parts of the electromagnetic spectrum and/or invisible parts of the electromagnetic spectrum (e.g., infrared, ultraviolet), and/or other energy (e.g., pressure waves). The image information may characterize and/or define images, including but not limited to graphical and/or visual imagery. Camera(s) 15a may include one or more discrete camera or sensor elements. Camera(s) 15a may be configured to have overlapping fields of view covering 360 degrees around aircraft 15. Camera(s) 15a may be carried by aircraft 15. Camera(s) 15a may be configured to capture image information that conveys imagery, including in visible parts of the spectrum. The imagery may pertain to an area in front of and/or below aircraft 15.

In some implementations, aircraft 15 and/or system 100 may obtain, receive, and/or generate information regarding other aircraft (e.g., during active flight), Automatic Dependent Surveillance - Broadcast (ADS-B) information (In and/or Out), radar and/or flight alarm (FLARM) information, Traffic Alert and Collision Avoidance System (TCAS) information, lowest selectable speed (VLS) information, instrument read-out information (e.g., altimeter, airspeed, compass, etc.), positional information, timing information, aircraft identification, altitude, heading, bearing, orientation, velocity, and/or other information related to aircraft 15 and/or its surroundings. In some cases, aircraft 15 and/or system 100 may obtain, receive, and/or generate information regarding (nearby) airports and/or runways, e.g., during flight.

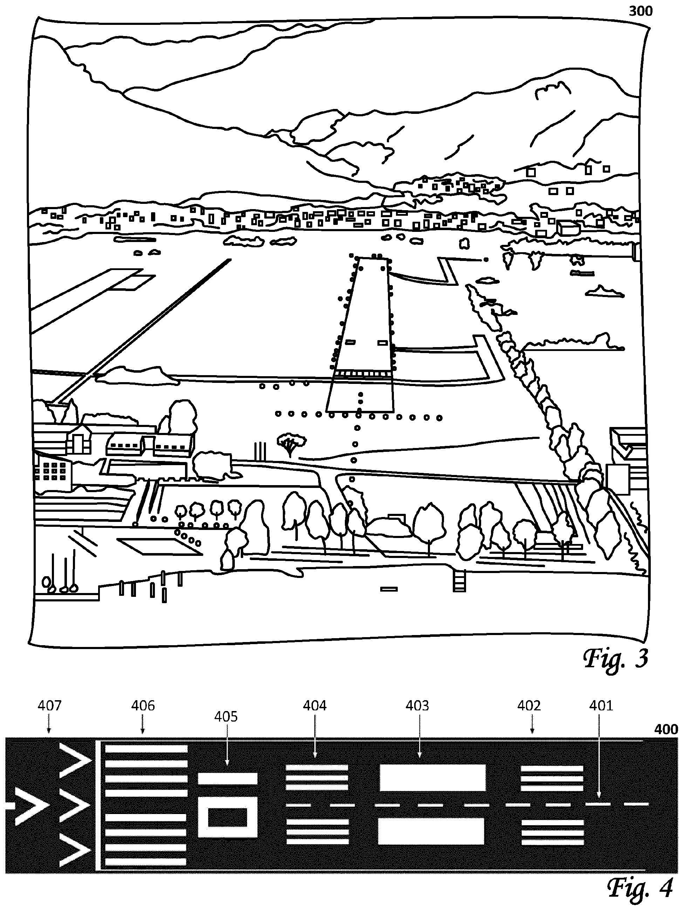

Image component 108 may be configured to obtain, receive, and/or determine information. The information may include images from image information as captured by one or more sensors 15b and/or cameras 15a. Images may be organized in a multi-dimensional coordinate system having individual image elements. In some implementations, the multi-dimensional coordinate system may be a grid, including but not limited to a two-dimensional grid. The individual image elements may be (or include) pixels. In some cases, the individual image elements include depth information. In some implementations, image component 108 may obtain, receive, and/or determine information in an ongoing manner, e.g., continually, continuously, and/or at intervals. By way of non-limiting example, FIG. 3 depicts an image 300 as may be captured during flight and/or obtained by system 100 to detect runway incursions on runways. For example, image 300 depicts an area in front of and/or below an aircraft in flight.

Referring to FIG. 1, detection component 110 may be configured to detect, identify, classify, and/or otherwise determine information and/or objects in images, particularly images from the image information as captured and/or obtained by sensors 15b, cameras 15a, and/or image component 108. Detection component 110 may operate in an ongoing manner. For example, detection component 110 may detect a particular runway in a particular image (or in particular image information). In some implementations, runway detection may include identifying a planar surface section within a particular image. For example, such a section may need to be sufficiently flat, without sloping. For example, such a section may need to be sufficiently large to accommodate aircraft to land. Other considerations may be required to be met in order for such a section to be deemed serviceable as a runway.

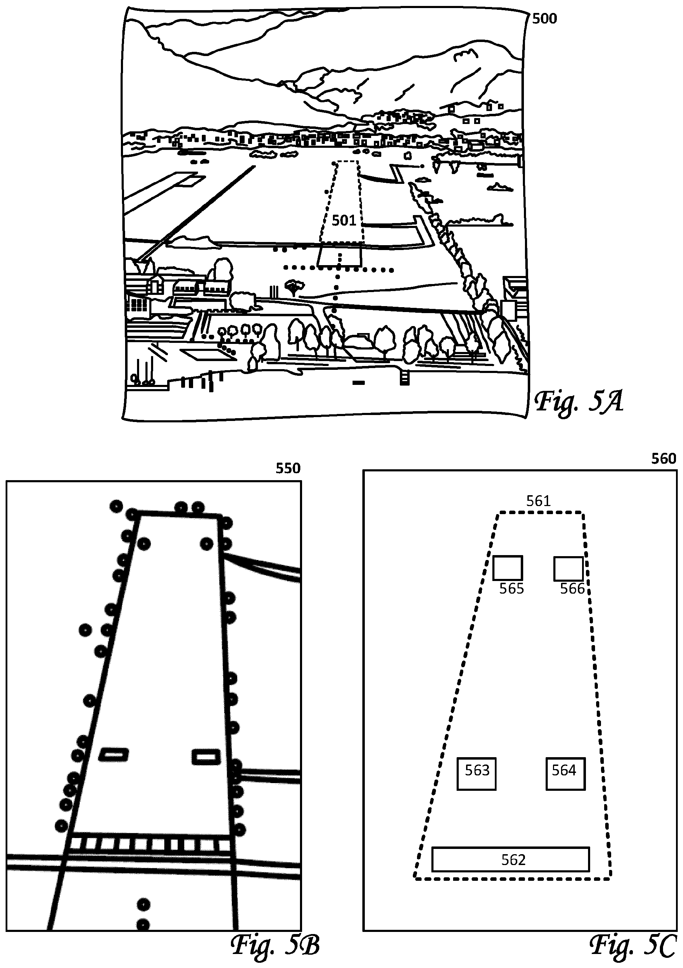

In some implementations, runway detection may include determining a runway polygon that encompasses (at least) a planar surface section in the particular image. Individual image elements (e.g., pixels) of the particular image are either inside this runway polygon or outside this runway polygon. By way of non-limiting example, FIG. 5A depicts an image 500 (similar to image 300 in FIG. 3) for which a runway has been detected and onto which a determined runway polygon 501 is superimposed (by a dotted line) over the section in the center of image 500 (the white polygon) that corresponds to the detected runway. By way of non-limiting example, FIG. 5B depicts an image 550 (a zoomed-in portion of image 300 in FIG. 3) for which a runway has been detected and onto which a determined runway polygon could be superimposed over the section in the center of image 550 (similar to polygon 501 in FIG. 5A) that corresponds to the detected runway.

In some implementations, determining a runway polygon may be implemented as determining a bounding box large enough to at least encompass the detected planar surface section and/or the detected runway. In such cases, a bounding box may include areas adjacent to a runway.

Referring to FIG. 1, in some implementations, detection component 110 may be configured to generate feature vectors, e.g., based on image information for a particular image. In some cases, detection component 110 may generate a grid of feature vectors that correspond to a grid of individual image elements of the particular image. Certain feature vectors may correspond to certain image elements. Other feature vectors may correspond to multiple image elements, e.g., a set of image elements. For example, a particular set of image elements may form a section of an image, such as a circle of polygon within the image. In some implementations, one or more of the generated feature vectors may indicate one or more markings used on runways and/or indicative of runways. For example, runway markings may include one or more of a centerline, side-stripe markings, aiming point markings, touchdown zones, (numerical) designation markings, threshold markings, displaced thresholds, and/or other markings. Typically, markings are in white. By way of non-limiting example, FIG. 4 depicts a diagram 400 depicting exemplary runway markings on an exemplary runway for which system 100 generated feature vectors. Diagram 400 depicts an exemplary runway with a centerline 401, side-stripe markings 402, aiming point markings 403, touchdown zones 404, (numerical) designation markings 405, threshold markings 406, and displaced thresholds 407. Individual real-world runways do not necessarily include all of these markings.

Referring to FIG. 1 and detection component 110, in some implementations, runway detection (including the determination of a runway polygon in a particular image) may be performed using one or more machine learning models 134, which may include a (deep) neural network. For example, a particular neural network as used in system 100 may have been trained on images of runways free of runway incursions, also referred to as clear runways. In some implementations, detection of markings and/or objects within a previously-detected runway may be performed using machine learning model(s) 134. In some implementations, the generation of feature vectors may be performed using machine learning model(s) 134 (which may include a trained neural network that has been trained on images of clear runways). Feature vectors may indicate markings that are typical and/or consistent with runways. In some implementations, the detection and/or classification of objects on a particular runway may be performed using machine learning model(s) 134. For example, if another aircraft is detected on a particular runway, such a runway incursion will be detected using system 100, since it would form a collision hazard.

In some implementations, runway detection may be performed using a synthetic vision system (SVS), not depicted in FIG. 1. An SVS may be configured to generate a computer-generated image of the area in front of and/or below aircraft 15. In some cases, an SVS may be configured to detect a particular runway and/or determine a corresponding runway polygon. An SVS may perform certain functionality attributed elsewhere to components of system 100, including but not limited to sensors 15b, cameras 15a, and/or detection component 110.

Assessment component 112 may be configured to perform assessments pertaining to detected runways. For example, assessment component 112 may perform an assessment whether certain feature vectors indicate features that are consistent and/or congruent with features usually found on clear runways, including but not limited to runway markings. Assessment component 112 may assess whether a set or subset of feature vectors are consistent and/or congruent with a clear runway free of runway incursions. In some implementations, assessment component 112 may operate on just the subset of feature vectors that are associated with the image elements of the multi-dimensional coordinate system within the previously-determined runway polygon. Objects, markings, and/or other features outside the runway polygon (or outside the detected runway) may be of no concern or lesser concern when it comes to detecting runway incursions. In some implementations, a particular assessment may include detecting and/or classifying objects on a previously-detected runway (or, e.g., within the pixels of a previously-determined runway polygon).

In some implementations, operations attributed to assessment component 112 may be performed using machine learning model(s) 134. In some cases, detecting and/or classifying objects, markings, and/or other features on a previously-detected runway may be performed using machine learning model(s) 134. By way of non-limiting example, FIG. 5C depicts an image 560 (similar to image 550 in FIG. 5B) for which an assessment has been performed on the image elements within a runway polygon 561, which corresponds to a previously-detected runway. An assessment component has assessed one or more feature vectors for object 562, which has been deemed to indicate a particular marking indicative not only of a runaway, but of a clear runway. Likewise, feature vectors for objects 563, 564, 565, and 566 have similarly been deemed to indicate different markings consistent with a clear runway free of runway incursions, e.g., because these are runway markings.

By way of non-limiting example, detected features may be compared to a set of features found in a training set of image data (of clear runways). For example, such a comparison may determine similarity and/or distance to one or more of these features. In some cases, a comparison may use an average distance to the one or more nearest neighbors in the set of feature vectors for a set of clear runways. In some implementations, such a comparison may be based on one or more of (semantic) distance, Euclidean distance, (cosine) similarity, and/or dot product similarity. By way of non-limiting example, measuring similarity between feature vectors may include calculating inner product, cosine similarity, Euclidean distance, Jaccard similarity, Manhattan similarity, and/or another similarity metric. Features and/or objects deemed out of distribution, relative to a set of features found in a training set of image data of clear runways, may cause assessment component 112 to determine a particular runway is not free of incursions.

In some implementations, assessments may be performed using a general feature qualifier mechanism or model that has been trained non-specifically. In other implementations, assessments may be performed using a neural network that has been trained specifically using images of runways. In yet other implementations, assessments may be performed using a neural network that has been trained specifically using images of the particular airport and/or runway(s) nearest to the current position of aircraft 15. In some implementations, assessments may be performed using both general and specifically trained neural networks. In some implementations, assessments may be performed using a database of features and/or feature vectors (created either generally using images of 100s or 1000s of runways or created specifically for a smaller set of airports and/or runways). Such a database may also be referred to as a memory bank. In certain cases, comparisons using a memory bank may be more computationally efficient than using a trained neural network.

Presentation component 114 may be configured to generate presentation information and present the presentation information, *e.g.,* on a user interface to a user *(e.g.,* of aircraft 15). Presentation information may be generated based on assessments by assessment component 112 and/or other components of system 100. For example, responsive to an assessment that a detected object is not consistent and/or congruent with clear runway free of runway incursions, presentation component 114 may generate and present presentation information indicating one or more of this object (e.g., superimposed within the runway polygon), the detected runway, the image information, and/or the status of the detected runway as being not a clear runway free of runway incursions. Alternatively, and/or simultaneously, responsive to an assessment that a particular runway is not a clear runway free of runway incursions, presentation component 114 may generate and present presentation information indicating one or more of the assessment, the detected runway, the image information, and/or the status of the detected runway as being not a clear runway free of runway incursions. Alternatively, and/or simultaneously, responsive to an assessment that one or more feature vectors are not consistent and/or congruent with clear runway free of runway incursions, presentation component 114 may generate and present presentation information indicating one or more of the feature vectors, the corresponding image elements in the particular image, the detected runway, the image information, and/or the status of the detected runway as being not a clear runway free of runway incursions.

In some cases, the generated presentation information is formatted to be presented on a two-dimensional display, including but not limited to a Horizontal Situation Indicator (HSI). For example, three-dimensional information may be projected to two dimensions.

Referring to FIG. 1, model component 116 may be configured to use and/or interact with one or more machine learning model(s) 134, which may include one or more neural networks. Model component 116 may provide prompts, context, and/or other information as input to machine learning model(s) 134. Model component 116 may obtain and/or receive information as output from machine learning model(s) 134. In some implementations, model component 116 may provide image information, as captured by cameras 15a, as input to machine learning model(s) 134 for detection of runways and/or other objects, generation of feature vectors, classification of objects, assessment of (sets of) feature vectors, and/or other tasks to be performed by machine learning model(s) 134.

In some implementations, aircraft 15 may support autonomous flight control. Alternatively, and/or simultaneously, in some cases, aircraft 15 may support pilot assistance, in particular non-autonomous pilot assistance or, in other words, assisted flight control.

In some implementations, aircraft 15 may be configured to present interfaces *(e.g.,* user interfaces 125) to users, *e.g.,* through client computing platforms 104 associated with the respective users. Presentations of user interfaces to users may include information regarding detected runways (and/or information derived therefrom or based thereon), *e.g.,* as determined by system 100. In some cases, aircraft 15 may recommend an action based on a determination, *e.g.,* to evade a particular detected runway incursion.

Referring to FIG. 1, user interfaces 125 may be configured to facilitate interaction between users 123, system 100, and aircraft 15, and/or between users 123 and client computing platforms 104. For example, user interfaces 125 may provide an interface through which users 123 may provide information to and/or receive information from system 100 and/or aircraft 15. In some implementations, user interface 125 may include one or more of a display screen, touchscreen, monitor, a keyboard, buttons, switches, knobs, levers, mouse, microphones, sensors to capture voice commands, sensors to capture body movement, sensors to capture hand and/or finger gestures, and/or other user interface devices configured to receive and/or convey user input. In some implementations, one or more user interfaces 125 may be included in one or more client computing platforms 104. In some implementations, one or more user interfaces 125 may be included in system 100.

Referring to FIG. 1, in some implementations, aircraft 15, system 100, client computing platform(s) 104, and/or external resources 138 may be operatively linked via one or more electronic communication links. For example, such electronic communication links may be established, at least in part, via one or more networks 13 such as the Internet and/or other networks. It will be appreciated that this is not intended to be limiting, and that the scope of this disclosure includes operative linking via some other communication media.

A given client computing platform 104 may include one or more processors configured to execute computer program components. The computer program components may be configured to enable an expert or user associated with the given client computing platform 104 to interface with system 100 and/or external resources 138, and/or provide other functionality attributed herein to client computing platform(s) 104. By way of non-limiting example, the given client computing platform 104 may include one or more of a desktop computer, a laptop computer, a handheld computer, a tablet computing platform, a NetBook, a Smartphone, a gaming console, and/or other computing platforms.

External resources 138 may include sources of information outside of system 100, external entities participating with system 100, external providers of computation and/or storage services *(e.g.,* a server external to system 100), external providers of relevant information *(e.g.,* flight scheduling information, weather information, *etc.),* and/or other resources. In some implementations, some or all of the functionality attributed herein to external resources 138 may be provided by resources included in system 100. In some implementations, one or more external resources 138 may provide information to other components of system 100. In some cases, a synthetic vision system (SVS) may be considered as (a part of) external resources 138. In some cases, one or more machine learning models may be considered as (a part of) external resources 138.

Server(s) 102 may include communication lines, or ports to enable the exchange of information with a network and/or other computing platforms. Illustration of server(s) 102 in FIG. 1 is not intended to be limiting. Server(s) 102 may include a plurality of hardware, software, and/or firmware components operating together to provide the functionality attributed herein to server(s) 102. For example, server(s) 102 may be implemented by a cloud of computing platforms operating together.

Electronic storage 130 may comprise non-transitory storage media that electronically stores information. The electronic storage media may include one or both of system storage that is provided integrally *(i.e.,* substantially non-removable) with a corresponding server and/or removable storage that is removably connectable to the corresponding server via, for example, a port *(e.g.,* a USB port, a firewire port, *etc.)* or a drive *(e.g.,* a disk drive, etc.). Electronic storage 130 may include one or more of optically readable storage media *(e.g.,* optical disks, *etc.),* magnetically readable storage media *(e.g.,* magnetic tape, magnetic hard drive, floppy drive, etc.), electrical charge-based storage media *(e.g.,* EEPROM, RAM, *etc.),* solid-state storage media *(e.g.,* flash drive, *etc.),* and/or other electronically readable storage media. Electronic storage 130 may include one or more virtual storage resources *(e.g.,* cloud storage, a virtual private network, and/or other virtual storage resources). Electronic storage 130 may store software algorithms, information determined by corresponding processor(s), information received from corresponding server(s), information received from client computing platform(s) 104, and/or other information that enables server(s) 102 to function as described herein. In some implementations, electronic storage 130 may include one or more machine learning models 134.

Processor(s) 132 may be configured to provide information processing capabilities in server(s) 102. As such, processor(s) 132 may include one or more of a digital processor, an analog processor, a digital circuit designed to process information, an analog circuit designed to process information, a state machine, and/or other mechanisms for electronically processing information. Although processor(s) 132 is shown in FIG. 1 as a single entity, this is for illustrative purposes only. In some implementations, processor(s) 132 may include a plurality of processing units. These processing units may be physically located within the same device, or processor(s) 132 may represent processing functionality of a plurality of devices operating in coordination. Processor(s) 132 may be configured to execute components 108, 110, 112, 114, and/or 116, and/or other components. Processor(s) 132 may be configured to execute components 108, 110, 112, 114, and/or 116, and/or other components by software; hardware; firmware; some combination of software, hardware, and/or firmware; and/or other mechanisms for configuring processing capabilities on processor(s) 132. As used herein, the term "component" may refer to any component or set of components that perform the functionality attributed to the component. This may include one or more physical processors during execution of processor readable instructions, the processor readable instructions, circuitry, hardware, storage media, or any other components.

It should be appreciated that although components 108, 110, 112, 114, and/or 116 are illustrated in FIG. 1 as being implemented within two separate processing units, this is exemplary. In implementations in which processor(s) 132 and/or processor(s) 132 include multiple processing units, one or more of components 108, 110, 112, 114, and/or 116 may be implemented remotely from the other components. The description of the functionality provided by the different components 108, 110, 112, 114, and/or 116 described below is for illustrative purposes only, and is not intended to be limiting, as any of components 108, 110, 112, 114, and/or 116 may provide more or less functionality than is described. For example, one or more of components 108, 110, 112, 114, and/or 116 may be eliminated, and some or all of its functionality may be provided by other ones of components 108, 110, 112, 114, and/or 116. As another example, processor(s) 132 may be configured to execute one or more additional components that may perform some or all of the functionality attributed below to one of components 108, 110, 112, 114, and/or 116.

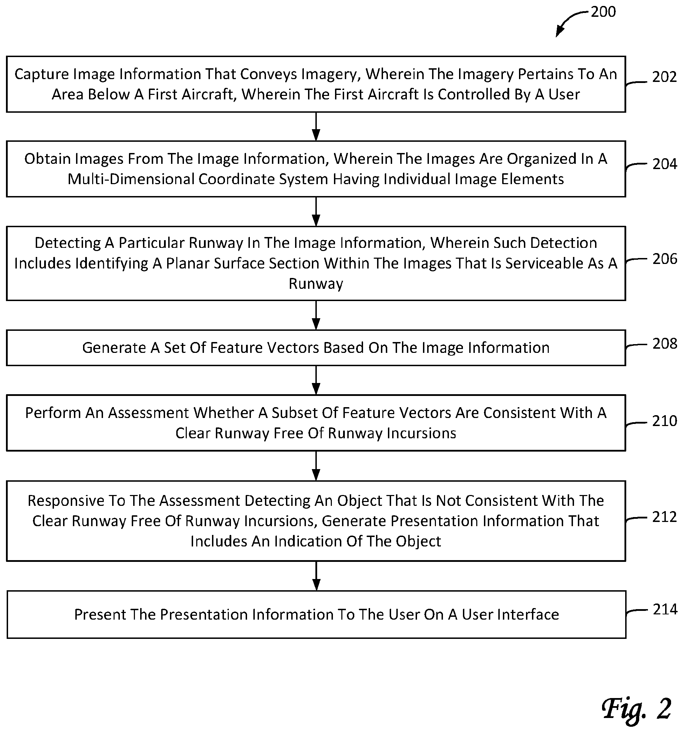

FIG. 2 illustrates a method 200 of detecting runway incursions on runways, *e.g.,* from a first aircraft during flight. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented in one or more processing devices *(e.g.,* a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200.

Regarding method 200, at an operation 202, image information that conveys imagery is captured, by one or more image sensors carried by a first aircraft. The captured imagery includes visible parts of the spectrum. The imagery pertains to an area in front of and/or below the first aircraft. The first aircraft is controlled by a user. In some embodiments, operation 202 is performed by one or more sensors and/or cameras the same as or similar to sensors 15b and/or cameras 15a (shown in FIG. 1 and described herein).

At an operation 204, images are obtained from the image information. The images are organized in a multi-dimensional coordinate system having individual image elements. In some embodiments, operation 204 is performed by an image component the same as or similar to image component 108 (shown in FIG. 1 and described herein).

At an operation 206, a particular runway is detected in the image information. Such detection includes (i) identifying a planar surface section within the images that is serviceable as a runway, and (ii) determining a runway polygon that encompasses the planar surface section within the images, such that the individual image elements of the multi-dimensional coordinate system are either inside the runway polygon or outside the runway polygon. In some embodiments, operation 206 is performed by a detection component the same as or similar to detection component 110 (shown in FIG. 1 and described herein).

At an operation 208, a set of feature vectors is generated based on the image information. In some embodiments, operation 208 is performed by a model component and/or a machine learning model the same as or similar to model component 116 and/or machine learning model(s) 134 (shown in FIG. 1 and described herein).

At an operation 210, an assessment is performed whether a subset of feature vectors are consistent with a clear runway free of runway incursions. The subset of feature vectors are associated with the individual image elements of the multi-dimensional coordinate system inside the runway polygon. In some embodiments, operation 210 is performed by an assessment component the same as or similar to assessment component 112 (shown in FIG. 1 and described herein).

At an operation 212, responsive to the assessment detecting an object that is not consistent with the clear runway free of runway incursions, presentation information is generated based on the assessment such that the presentation information includes an indication of the object. In some embodiments, operation 212 is performed by a presentation component the same as or similar to presentation component 114 (shown in FIG. 1 and described herein).

At an operation 214, the presentation information is presented to the user on a user interface. In some embodiments, operation 214 is performed by a presentation component the same as or similar to presentation component 114 (shown in FIG. 1 and described herein).

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. It is to be understood that the present technology contemplates that, to the extent possible, one or more features of any implementation can be combined with features of any other implementation.

## Claims

1. A system configured to detect runway incursions on runways, the system comprising:
one or more image sensors, carried by a first aircraft, configured to capture image information that conveys imagery, including in visible parts of the spectrum, wherein the imagery pertains to an area in front of and/or below the first aircraft, wherein the first aircraft is controlled by a user; and
one or more physical processors configured by machine-readable instructions to:
obtain, in an ongoing manner, images from the image information as captured by the one or more image sensors, wherein the images are organized in a multi-dimensional coordinate system having individual image elements;
detect a particular runway in the image information, wherein such detection includes:
(i) identifying a planar surface section within the images that is serviceable as a runway, and
(ii) determining a runway polygon that encompasses the planar surface section within the images, such that the individual image elements of the multi-dimensional coordinate system are either inside the runway polygon or outside the runway polygon;
generate a set of feature vectors based on the image information;
perform an assessment whether a subset of feature vectors are consistent with a clear runway free of runway incursions, wherein the subset of feature vectors are associated with the individual image elements of the multi-dimensional coordinate system inside the runway polygon;
responsive to the assessment detecting an object that is not consistent with the clear runway free of runway incursions, generate presentation information based on the assessment such that the presentation information includes an indication of the object; and
present the presentation information to the user on a user interface.

2. The system of claim 1, wherein the multi-dimensional coordinate system is a grid, and wherein the individual image elements include pixels.

3. The system of claim 1, wherein the detection of the particular runway includes determining whether the planar surface section is sufficiently flat and sufficiently large to be serviceable as the runway.

4. The system of claim 1, wherein one or more of the feature vectors indicate markings indicative of runways, including one or more of a center line, side-stripe markings, aiming points, touchdown zone, designation markings, and/or threshold markings.

5. The system of claim 1, wherein the assessment includes detecting one or more objects within the runway polygon and classifying the one or more objects.

6. The system of claim 1, wherein the one or more image sensors are part of a synthetic vision system (SVS) configured to generate a computer-generated image of the area in front of and/or below the first aircraft.

7. The system of claim 6, wherein the detection of the particular runway is performed by the synthetic vision system (SVS).

8. The system of claim 1, wherein the detection of the particular runway is performed by a trained machine learning model that has been trained on images of runways free of runway incursions.

9. The system of claim 1, wherein the assessment of the set of feature vectors is performed by a machine learning model.

10. The system of claim 1, wherein the assessment of the set of feature vectors is performed using a database of features.

11. A method of detecting runway incursions on runways, the method comprising:
capturing, by one or more image sensors carried by a first aircraft, image information that conveys imagery, including in visible parts of the spectrum, wherein the imagery pertains to an area in front of and/or below the first aircraft, wherein the first aircraft is controlled by a user;
obtaining, in an ongoing manner, images from the image information, wherein the images are organized in a multi-dimensional coordinate system having individual image elements;
detecting a particular runway in the image information, wherein such detection includes (i) identifying a planar surface section within the images that is serviceable as a runway, and *(ii)* determining a runway polygon that encompasses the planar surface section within the images, such that the individual image elements of the multi-dimensional coordinate system are either inside the runway polygon or outside the runway polygon;
generating a set of feature vectors based on the image information;
performing an assessment whether a subset of feature vectors are consistent with a clear runway free of runway incursions, wherein the subset of feature vectors are associated with the individual elements of the multi-dimensional coordinate system inside the runway polygon;
responsive to the assessment detecting an object that is not consistent with the clear runway free of runway incursions, generating presentation information based on the assessment such that the presentation information includes an indication of the object; and
presenting the presentation information to the user on a user interface.

12. The method of claim 11, wherein the multi-dimensional coordinate system is a grid, and wherein the individual image elements include pixels.

13. The method of claim 11, wherein the detection of the particular runway includes determining whether the planar surface section is sufficiently flat and sufficiently large to be serviceable as the runway.

14. The method of claim 11, wherein one or more of the feature vectors indicate markings indicative of runways, including one or more of a center line, side-stripe markings, aiming points, touchdown zone, designation markings, and/or threshold markings.

15. The method of claim 11, wherein the assessment includes detecting one or more objects within the runway polygon and classifying the one or more objects.
